# EUROPEAN PATENT SPECIFICATION

(11) **EP 3 444 910 B1**
(45) Date of publication and mention of the grant of the patent: **22.12.2021**
(21) Application number: 17186958.9
(22) Date of filing: 18.08.2017
(51) Int. Cl.: H02G 1/08

(54) **CABLE INSERTION TOOL**
KABELEINFÜHRUNGSWERKZEUG
OUTIL D'INSERTION DE CÂBLE

(43) Date of publication of application: 20.02.2019
(73) Proprietor: Aptiv Technologies Limited, St. Michael (BB)
(72) Inventor: KONIECZNY, Mateusz, 31-416 Krakow (PL); FORYS, Pawel, 31-836 Krakow (PL); SIWIEC, Wieslaw, 34-205 Stryszawa (PL); STASICA, Krzysztof, 34-331 Swinna (PL)
(74) Representative: Manitz Finsterwald Patent- und Rechtsanwaltspartnerschaft mbB

(56) References cited:
- DE-A1-102006 062 545
- US-A1- 2007 295 947
- Tim Horberry ET AL: "Human Factors for the Design, Operation, and Maintenance of Mining Equipment", , 19 April 2016 (2016-04-19), XP055444855, Boca Raton ISBN: 978-1-4398-0231-1 Retrieved from the Internet: URL:http://www.ionnic.com/media/uploads/vi deos/harnessprotectionsystems2010catalogue 151211.pdf [retrieved on 2016-04-19]
- Murrplastik ET AL: "Wire insertion aid", , 11 July 2016 (2016-07-11), XP055444852, Retrieved from the Internet: URL:http://murrplastik.com/assets/Uploads/ KE-wire-insertion-tool.pdf [retrieved on 2018-01-26]
- Moltec International: "Split conduit intertion tool", , 8 September 2012 (2012-09-08), XP055444853, Retrieved from the Internet: URL:http://moltecinternational.com/datashe ets/st.pdf [retrieved on 2018-01-26]

## Description

### TECHNICAL FIELD OF INVENTION

The present invention relates to a cable insertion tool for supporting manually insertion of at least one electrical cable into a slashed corrugated pipe in accordance with the preamble of claim 1 (P.7 of the brochure "Harness Protection Systems" by Total Source, 19.04.2016, XP055444855).

### BACKGROUND OF INVENTION

The technique to protect electrical cable from damages by insertion of electrical cable into a slashed corrugated pipe it is well known in the art. Document DE10134570 discloses an application whereby an optical fiber is inserted into a slashed corrugated pipe with the help of a tool. The tool extends the longitudinal slot in the tube in an amount that the fiber can pass the slot and move to inside the slashed corrugated pipe. But over the time the requirements, concerning environmental temperatures and robustness of the wiring harnesses increased. This made it necessary to use improved materials for insulation of the cables and also for the slashed corrugated pipe surrounding the cables. State of the art slashed corrugated pipes, known as Monoflex slashed corrugated pipes, provide these increased requirements for slashed corrugated pipes. But the improved properties of the slashed corrugated pipes have on the other hand disadvantages that pop up while assembling the wiring harness. The Monoflex slashed corrugated pipes are harder than previously used tubes. Because of the big hardness of Monoflex tubes the tool life time is significantly decreased. While increasing the slot of the slashed corrugated pipe, the slashed corrugated pipe acts like a spring and tries to close the increased slot. A high spring force is generated while spreading the slashed corrugated pipe to feed in the wire. This results in that the sharp edges of the slot are pressed hard against everything that is in between the edges of the slot. An accidentally protruding wire can be damaged or cut by the edges. Insertion tools known in the art have to resist the sharp edges pressed towards the tool, which causes increased wear of the tool. Worn tools can also damage wires during assembly. As result any derailing (situation when tube fall from tool during assembly) can easy lead to cutting wires.

DE 10 2006 062545 A1 discloses a cable insertion tool having an inwardly curved body edge and guiding rib

Therefore the present invention improves the state of the art by providing a cable insertion tool that is usable for hard, state of the art slashed corrugated pipes, thereby protecting the wires of the cable while operating the cable insertion tool and having improved lifetime.

These and other objects which become apparent upon reading the following description are solved by a cable insertion tool according to independent claim 1.

### SUMMARY OF THE INVENTION

The present application relates to a cable insertion tool for supporting manually insertion of at least one electrical cable into a slashed corrugated pipe. The insertion tool comprises, a body formed by bending a quadrilateral sheet around an inlet axis defining an arc, having a first radius. The body has a u-shaped cross section perpendicular to the inlet axis and an outer surface. The quadrilateral sheet comprises a first corner a third corner located opposite the first corner, a body edge starting from a second corner continuing to the third corner and further to a fourth corner. The inlet axis extends from the first corner towards the third corner. The inlet axis is angled with respect to a plane spanned by the body edge between the third corner and the second corner and the third corner and the fourth corner. A first guiding rib extends from the body edge outwards. A support means, supporting the widening of a slot of the slashed corrugated pipe by urging against the inner surface of the slashed corrugated pipe, when the tool is positioned to be pulled along the slashed corrugated pipe.

The disclosed invention provides a cable insertion tool for usage in wiring application using robust slashed corrugated pipes to protect the electrical cable. The cable insertion tool has support means that reduce the high unwanted, forces that press the edges against the tool. The support means widen the slot to a certain amount by urging against the inner wall of the slashed corrugated pipe. A part of the generated spring force is taken over by the support means. The remaining spring force acting on the edges is not high enough to wear out the cable insertion tool in short time.

The body edge and the first guiding rib are curved inwards the body between the third corner and the second corner and between the third corner and the fourth corner. The body edge can be curved along the extension axis of the slashed corrugated pipe. The first guiding rib follows the curved design. The waved guiding rib pulls out the slashed corrugated pipe a little and takes also some spring force from the edges.

The term quadrilateral is referenced to Euclidean plane geometry, a quadrilateral is a polygon with four edges (or sides) and four vertices or corners.

According to a preferred embodiment the first guiding rib comprises a protection tongue protruding outwards from the third corner defining an angle to the outer surface. The protection tongue extends most preferred along the extension of the slashed corrugated pipe. The protection tongue keeps the wires of the cable inside the slashed corrugated pipe, while the slot is decreasing, after the tool is moved further, after insertion of the wires. The protection tongue covers the slot from the inside of the slashed corrugated pipe until the slot has its relaxed size.

Preferably the body comprises an inner surface free from irregularities. A smooth inner surface makes the tool easy to produce and also easy to operate in the production plant.

Preferably the body comprises a handle attached on the outer surface of the body between the first corner and the second corner or between the first corner and the fourth corner. The handle is arranged on the body on the side where the cable insertion tool is first inserted into the slot of the slashed corrugated pipe. The cable insertion tool will be than pulled along the slashed corrugated pipe, while holding it on the handle.

Advantageously, the body is mirror symmetrical with respect to the inlet axis. As symmetrical body promises a well working cable insertion tool. An unsymmetrical embodiment is also possible for special application.

Preferably the body allows flexible deformation when the second corner is moved towards the fourth corner. When the cable insertion tool is used, the second corner and the fourth corner are in touch. After usage the cable insertion tool relaxes again to its relaxed shape. There are no hinges necessary to operate the cable insertion tool. Preferably the first guiding rib extends from the second corner to the fourth corner and whereby a second guiding rib extends parallel shifted along the inlet axis from an outer surface of the body. A second guiding rib parallel to the first guiding rib defines a guiding groove that guides the cable insertion tool, taking the wall of the slashed corrugated pipe as a guiding rail. That design improves the handling while assembling in the harness manufacturing plant.

The support means comprise a guiding fin arranged between the third corner and the second corner protruding outwardly from the body. The guiding fin protrudes from the outer surface or from the body edge or where suitable. The guiding fin protrudes flexible against the inner wall of the slashed corrugated pipe and provides this way the additionally force to widen the slot of the slashed corrugated pipe.

Advantageously, the guiding fin is L-shaped or curved, comprising a base fin portion mechanically connected to the body. The guiding fin can be shaped in any possible way if it improves the technical function. The mentioned embodiments promise a good combination of rigidity and flexibility.

Advantageously, the guiding fin comprises a cable slide surface arranged opposite to the slide fin portion. When necessary the function of the guiding fin can be increased by using the wire cable as support for the guiding fin. This design enables the guiding fin to push harder against the inner surface because flexing towards the wire cable is not possible.

Preferably the base fin portion comprises at least one sound rib protruding from the base fin portion adapted to stay away from the corrugations of the slashed corrugated pipe while the cable insertion tool is moved along the slashed corrugated pipe and wherein the at least one sound rib hit against the corrugations of the slashed corrugated pipe when the cable insertion tool is used in a misaligned position thereby generating a sound. While manufacturing in the harness plant audible and a haptic feedback is important for producing constant quality. Misalignments of the cable insertion tool are immediately detectable. Correct usage of the cable insertion tool reduces also faster wear out of the cable insertion tool.

Advantageously, the guiding fin extends from the body edge defining an angle of more than 45° and less than 180° with respect to the outer surface. The guiding fin can be arranged in various angles and is adaptable to a variety of requirements, depending on size and material of the slashed corrugated pipe.

Preferably the body is made from one piece. Caused by the flexible body the cable insertion tool can be made from one piece for example from a sheet metal or by injection molding from plastics.

Advantageously the body is made of plastics. A body made of plastics is easy and cheap to produce.

### Description of the preferred embodiments

In the following, the invention is described exemplarily with reference to the enclosed figures, in which
- Fig. 1: shows a side, view of a cable insertion tool known in the art;
- Fig. 2: shows a top, view of a cable insertion tool known in the art;
- Fig. 3: shows a perspective, view of the cable insertion tool;
- Fig. 4: shows a detailed view of the support means of the cable insertion tool;
- Fig. 5: shows a side view of the cable insertion tool, focusing on the area around the body edge;

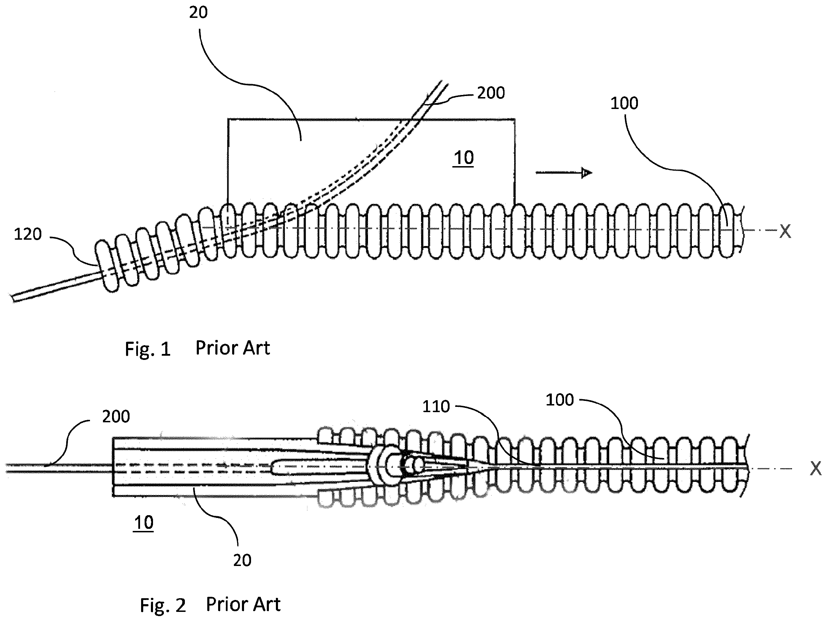

Figure 1 shows a side view and figure 2 shows a top view of a cable insertion tool 10 known in the art, while inserting an electrical cable 200 into a slashed corrugated pipe 100. The cable insertion tool 10 is already inserted into the slot 110 of the slashed corrugated pipe 100. The body 20 of the cable insertion tool 10 is all moved along a longitudinal axis X of the slashed corrugated pipe 100, thereby widening the slot 110 of the slashed corrugated pipe 100. The electrical cable 200 is guided through the expanded slot 110 into the inside 120 of the slashed corrugated pipe 100. The slot 110 is only expanded at the position where the cable insertion tool 10 his present. When the cable insertion tool 10 is moved further along the longitudinal axis X of the slashed corrugated pipe 100, the expanded slot 110 relaxes and the slot wide decreases.

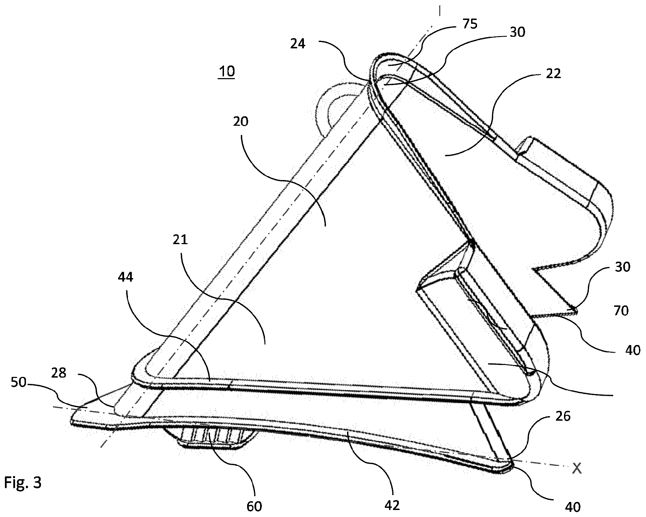

Figure 3 shows a cable insertion tool 10 for supporting manually insertion of at least one electrical cable 200 into a slashed corrugated pipe 100. The insertion tool 10 comprises, a body 20 formed by bending a quadrilateral sheet around an inlet axis I defining an arc, having a first radius. The body 20 has a u-shaped cross section perpendicular to the inlet axis I and an outer surface 21. The quadrilateral sheet comprises a first corner 24, a third corner 28 located opposite the first corner, a body edge 40 starting from a second corner 26 continuing to the third corner 28 and further to a fourth corner 30. The inlet axis I extends from the first corner 24 towards the third corner 28. The inlet axis I is angled with respect to a plane spanned by the body edge 40 between the third corner 28 and the second corner 26 and the third corner and the fourth corner 30, a first guiding rib 42 extends from the body edge 40 outwards, a support means, supporting the widening of a slot 110 of the slashed corrugated pipe 100 by urging against the inner surface of the slashed corrugated pipe 100, when the tool is positioned to be pulled along the slashed corrugated pipe 100. The first guiding rib 42 comprises a protection tongue 50 protruding outwards, from the third corner 28 defining an angle to the outer surface 21. The Protection tongue 50 protrudes parallel the longitudinal axis X of the slashed corrugated pipe 100. The body 20 comprises an inner surface 22, free from irregularities. The inner surface 22 surrounds the at least one electrical cable 200 while the insertion process. Because the inner surface 22 is smooth the at least one electrical cable 200 can move through the cable insertion tool 10 quite easy. The body 20 comprises a handle 70 attached on the outer surface 21 of the body 20 between the first corner 24 and the second corner 26 or between the first corner 24 and the fourth corner 30. The body 20 is mirror symmetrical with respect to the inlet axis I. The first guiding rib 42 extends from the second corner 26 to the fourth corner 30 and whereby a second guiding rib 44 extends parallel shifted along the inlet axis I from an outer surface 21 of the body 20. The support means comprise a guiding fin 60, arranged between the third corner 28 and the second corner 26 protruding outwardly from the body 20.

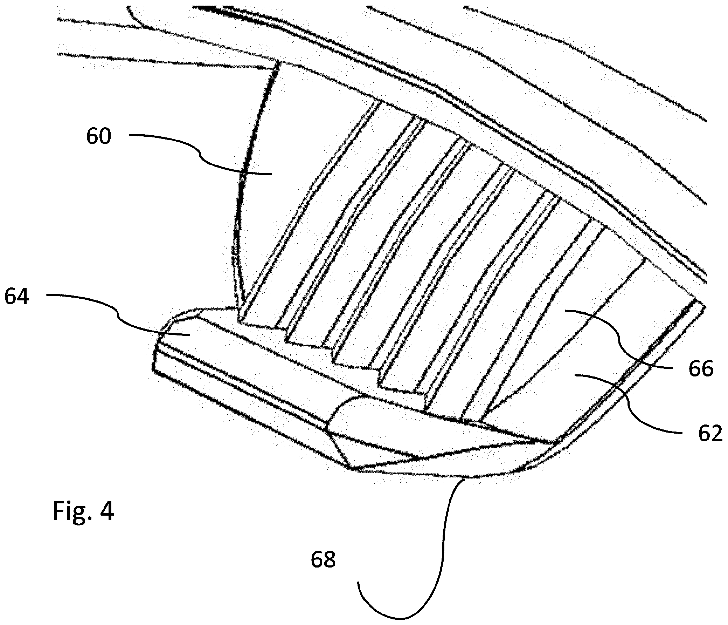

Figure 4 shows a detailed view of the support means of the cable insertion tool. The guiding fin 60 is L-shaped or curved, comprising a base fin portion 62 mechanically connected to the body edge 40 and a slide fin portion 64 having a free end protruding from the base fin portion 62. The guiding fin 60 comprises a cable slide surface 68 arranged opposite to the slide fin portion 64. The base fin portion 62 comprises at least one sound rib 66, protruding from the base fin portion 62 adapted to stay away from the corrugations of the slashed corrugated pipe 100 while the cable insertion tool 10 is moved along the slashed corrugated pipe 100 and wherein the at least one sound rib 66 hit against the corrugations of the slashed corrugated pipe 100 when the cable insertion tool 10 is used in a misaligned position thereby generating a sound. The guiding fin 60 extends from the body edge 40 defining an angle of more than 45° and less than 180° with respect to the outer surface 21.

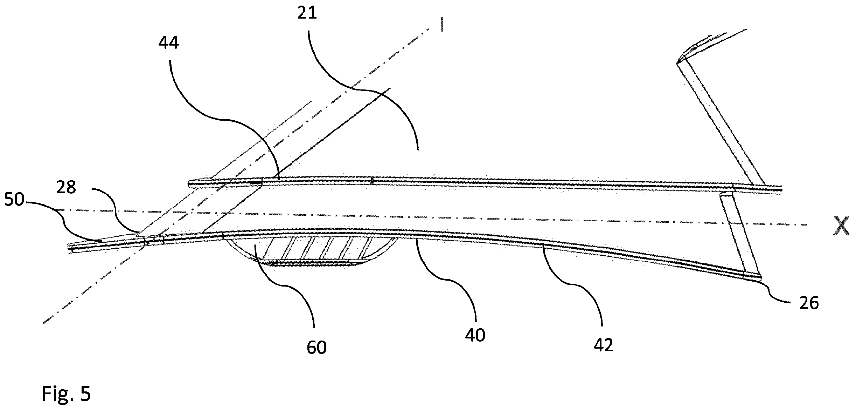

Figure 5 shows a side view of the cable insertion tool, focusing on the area around the body edge 40. The body edge 40 is curved inwards the body 20 between the third corner 28 and the second corner 26 and between the third corner and the fourth corner 30.

## Claims

1. A cable insertion tool (10) for supporting manually insertion of at least one electrical cable (200) into a slashed corrugated pipe (100), whereby the insertion tool (10) comprises, a body (20) formed by bending a quadrilateral sheet around an inlet axis (I) defining an arc, having a first radius whereby the body (20) has a u-shaped cross section perpendicular to the inlet axis (I) and an outer surface (21), the quadrilateral sheet comprises a first corner (24), a third corner (28) located opposite the first corner, a body edge (40) starting from a second corner (26) continuing to the third corner (28) and further to a fourth corner (30), whereby the inlet axis (I) extends from the first corner (24) towards the third corner (28), the inlet axis (I) is angled with respect to a plane spanned by the body edge (40) between the third corner (28) and the second corner (26) and the third corner (28) and the fourth corner (30), a first guiding rib (42) extends from the body edge (40) outwards, a support means (60) configured to support the widening of a slot (110) of the slashed corrugated pipe (100) by urging against the inner surface of the slashed corrugated pipe (100), when the tool is positioned to be pulled along the slashed corrugated pipe (100) **characterized in that** in a side view parallel to said plane the body edge (40) and the first guiding rib (42) are curved inwards the body (20) between the third corner (28) and the second corner (26) and between the third corner (28) and the fourth corner (30), and that the support means comprise a guiding fin (60) arranged between the third corner (28) and the second corner (26) protruding outwardly from the body (20).

2. A cable insertion tool (10) according to claim 1, wherein the first guiding rib (42) comprises a protection tongue (50) protruding outwards, from the third corner (28) defining an angle to the outer surface (21).

3. A cable insertion tool (10) according to any preceding claim, wherein the body (20) comprises an inner surface (22), free from irregularities.

4. A cable insertion tool (10) according to any preceding claim, wherein the body (20) comprises a handle (70) attached on the outer surface (21) of the body (20) between the first corner (24) and the second corner (26) or between the first corner (24) and the fourth corner (30).

5. A cable insertion tool (10) according to any preceding claim, wherein the body (20) is mirror symmetrical with respect to the inlet axis (I).

6. A cable insertion tool (10) according to any preceding claim, wherein the body (20) allows flexible deformation when the second corner (26) is moved towards the fourth corner (30).

7. A cable insertion tool (10) according to the preceding claim, wherein the first guiding rib (42) extends from the second corner (26) to the fourth corner (30) and whereby a second guiding rib (44) extends parallel shifted along the inlet axis (I) from an outer surface (21) of the body (20).

8. A cable insertion tool (10) according to claim 1, wherein the guiding fin (60) is L-shaped or curved, comprising a base fin portion (62) mechanically connected to the body edge (40) and a slide fin portion (64) having a free end protruding from the base fin portion (62).

9. A cable insertion tool (10) according to claim 8, wherein the guiding fin (60) comprises a cable slide surface (68) arranged opposite to the slide fin portion (64).

10. A cable insertion tool (10) according to claim 8 or 9, wherein the base fin portion (62) comprises at least one sound rib (66), protruding from the base fin portion (62) adapted to stay away from the corrugations of the slashed corrugated pipe (100) while the cable insertion tool (10) is moved along the slashed corrugated pipe (100) and wherein the at least one sound rib (66) hit against the corrugations of the slashed corrugated pipe (100) when the cable insertion tool (10) is used in a misaligned position thereby generating a sound.

11. A cable insertion tool (10) according to claim 1, wherein the guiding fin (60) extends from the body edge (40) defining an angle of more than 45° and less than 180° with respect to the outer surface (21).

12. A cable insertion tool (10) according to any preceding claim, wherein the body (20) is made from one piece.

13. A cable insertion tool (10) according to any preceding claim, wherein the body (20) is made of plastics.

## Patentansprüche

1. Kabeleinführwerkzeug (10) zum Unterstützen eines manuellen Einführens mindestens eines elektrischen Kabels (200) in ein geschlitztes Wellrohr (100), wobei das Einführwerkzeug (10) einen Körper (20) umfasst, der durch Biegen einer vierseitigen Platte um eine Einlassachse (I) gebildet ist, die einen Bogen definiert, der einen ersten Radius aufweist, wobei der Körper (20) einen u-förmigen Querschnitt senkrecht zur Einlassachse (I) und eine Außenfläche (21) aufweist, die vierseitige Platte eine erste Ecke (24), eine dritte Ecke (28), die gegenüber der ersten Ecke angeordnet ist, einen Körperrand (40) umfasst, der von einer zweiten Ecke (26) ausgeht und sich zur dritten Ecke (28) und weiter zu einer vierten Ecke (30) fortsetzt, wobei sich die Einlassachse (I) von der ersten Ecke (24) zur dritten Ecke (28) erstreckt, die Einlassachse (I) in Bezug auf eine Ebene angewinkelt ist, die von dem Körperrand (40) zwischen der dritten Ecke (28) und der zweiten Ecke (26) und der dritten Ecke (28) und der vierten Ecke (30) aufgespannt ist, sich eine erste Führungsrippe (42) von dem Körperrand (40) nach außen erstreckt, ein Stützmittel (60), das so konfiguriert ist, dass es die Aufweitung eines Schlitzes (110) des geschlitzten Wellrohrs (100) unterstützt, indem es gegen die Innenfläche des geschlitzten Wellrohrs (100) drückt, wenn das Werkzeug so positioniert ist, dass es entlang des geschlitzten Wellrohrs (100) gezogen wird, **dadurch gekennzeichnet, dass** der Körperrand (40) und die erste Führungsrippe (42) in einer Seitenansicht parallel zu der Ebene in Richtung des Körpers (20) zwischen der dritten Ecke (28) und der zweiten Ecke (26) und zwischen der dritten Ecke (28) und der vierten Ecke (30) gekrümmt sind, und dass das Stützmittel eine Führungsrippe (60) umfasst, die zwischen der dritten Ecke (28) und der zweiten Ecke (26) angeordnet ist und von dem Körper (20) nach außen vorsteht.

2. Kabeleinführwerkzeug (10) nach Anspruch 1, wobei die erste Führungsrippe (42) eine Schutzzunge (50) aufweist, die von der dritten Ecke (28) nach außen vorsteht und einen Winkel zur Außenfläche (21) bildet.

3. Kabeleinführwerkzeug (10) nach einem der vorhergehenden Ansprüche, wobei der Körper (20) eine Innenfläche (22) aufweist, die frei von Unregelmäßigkeiten ist.

4. Kabeleinführwerkzeug (10) nach einem der vorhergehenden Ansprüche, wobei der Körper (20) einen Griff (70) umfasst, der an der Außenfläche (21) des Körpers (20) zwischen der ersten Ecke (24) und der zweiten Ecke (26) oder zwischen der ersten Ecke (24) und der vierten Ecke (30) angebracht ist.

5. Kabeleinführwerkzeug (10) nach einem der vorhergehenden Ansprüche, wobei der Körper (20) spiegelsymmetrisch in Bezug auf die Einlassachse (I) ist.

6. Kabeleinführwerkzeug (10) nach einem der vorhergehenden Ansprüche, wobei der Körper (20) eine flexible Verformung zulässt, wenn die zweite Ecke (26) zur vierten Ecke (30) bewegt wird.

7. Kabeleinführwerkzeug (10) nach einem der vorhergehenden Ansprüche, wobei sich die erste Führungsrippe (42) von der zweiten Ecke (26) zur vierten Ecke (30) erstreckt und wobei sich eine zweite Führungsrippe (44) parallel verschoben entlang der Einlassachse (I) von einer Außenfläche (21) des Körpers (20) erstreckt.

8. Kabeleinführwerkzeug (10) nach Anspruch 1, wobei die Führungsrippe (60) L-förmig oder gekrümmt ist und einen Basisrippenabschnitt (62), der mechanisch mit dem Körperrand (40) verbunden ist, und einen Gleitrippenabschnitt (64) mit einem freien Ende, das von dem Basisrippenabschnitt (62) vorsteht, umfasst.

9. Kabeleinführwerkzeug (10) nach Anspruch 8, wobei die Führungsrippe (60) eine Kabelgleitfläche (68) aufweist, die gegenüber dem Gleitrippenabschnitt (64) angeordnet ist.

10. Kabeleinführwerkzeug (10) nach einem der Ansprüche 8 oder 9, wobei der Basisrippenabschnitt (62) mindestens eine Geräuschrippe (66) umfasst, die von dem Basisrippenabschnitt (62) vorsteht und so beschaffen ist, dass sie von den Wellungen des geschlitzten Wellrohrs (100) fernbleibt, während das Kabeleinführwerkzeug (10) entlang des geschlitzten Wellrohrs (100) bewegt wird, und wobei die mindestens eine Geräuschrippe (66) gegen die Wellungen des geschlitzten Wellrohrs (100) stößt, wenn das Kabeleinführwerkzeug (10) in einer falsch ausgerichteten Position verwendet wird, wodurch ein Geräusch erzeugt wird.

11. Kabeleinführwerkzeug (10) nach Anspruch 1, wobei sich die Führungsrippe (60) von dem Körperrand (40) aus erstreckt und einen Winkel von mehr als 45° und weniger als 180° in Bezug auf die Außenfläche (21) bildet.

12. Kabeleinführwerkzeug (10) nach einem der vorhergehenden Ansprüche, wobei der Körper (20) aus einem Stück gefertigt ist.

13. Kabeleinführwerkzeug (10) nach einem der vorhergehenden Ansprüche, wobei der Körper (20) aus Kunststoff gefertigt ist.

## Revendications

1. Outil d'insertion de câbles (10) destiné à supporter une insertion manuelle d'au moins un câble électrique (200) jusque dans un tube ondulé coupé (100), dans lequel l'outil d'insertion (10) comprend un corps (20) formé en cintrant une feuille quadrilatérale autour d'un axe d'entrée (I) définissant un arc ayant un premier rayon, dans lequel le corps (20) a une section transversale en forme de U perpendiculaire à l'axe d'entrée (I) et une surface extérieure (21), la feuille quadrilatérale comprend un premier coin (24), un troisième coin (28) situé en vis-à-vis du premier coin, un bord de corps (40) démarrant depuis un deuxième coin (26) continuant jusqu'au troisième coin (28) et en outre jusqu'à un quatrième coin (30), dans lequel l'axe d'entrée (I) s'étend depuis le premier coin (24) vers le troisième coin (28), l'axe d'entrée (I) forme un angle par rapport à un plan couvert par le bord de corps (40) entre le troisième coin (28) et le deuxième coin (26) et le troisième coin (28) et le quatrième coin (30), une première nervure de guidage (42) s'étend depuis le bord de corps (40) vers l'extérieur, un moyen de support (60) configuré pour supporter l'élargissement d'une fente (110) du tube ondulé coupé (100) en forçant contre la surface intérieure du tube ondulé coupé (100), quand l'outil est positionné pour être tiré le long du tube ondulé coupé (100),
**caractérisé en ce que**, dans une vue latérale parallèle audit plan, le bord de corps (40) et la première nervure de guidage (42) sont incurvés vers l'intérieur du corps (20) entre le troisième coin (28) et le deuxième coin (26) et entre le troisième coin (28) et le quatrième coin (30), et **en ce que** le moyen de support comprend une ailette de guidage (60) agencée entre le troisième coin (28) et le deuxième coin (26) se projetant vers l'extérieur depuis le corps (20).

2. Outil d'insertion de câbles (10) selon la revendication 1, dans lequel la première rainure de guidage (42) comprend une langue de protection (50) se projetant vers l'extérieur depuis le troisième coin (28) définissant un angle par rapport à la surface extérieure (21).

3. Outil d'insertion de câbles (10) selon l'une quelconque des revendications précédentes, dans lequel le corps (20) comprend une surface intérieure (22) exempte d'irrégularités.

4. Outil d'insertion de câbles (10) selon l'une quelconque des revendications précédentes, dans lequel le corps (20) comprend une poignée (70) attachée à la surface extérieure (21) du corps (20) entre le premier coin (24) et le deuxième coin (26) ou entre le premier coin (24) et le quatrième coin (30).

5. Outil d'insertion de câbles (10) selon l'une quelconque des revendications précédentes, dans lequel le corps (20) est en symétrie plane par rapport à l'axe d'entrée (I).

6. Outil d'insertion de câbles (10) selon l'une quelconque des revendications précédentes, dans lequel le corps (20) permet une déformation flexible quand le deuxième coin (26) est déplacé vers le quatrième coin (30).

7. Outil d'insertion de câbles (10) selon l'une quelconque des revendications précédentes, dans lequel la première nervure de guidage (42) s'étend depuis le deuxième coin (26) jusqu'au quatrième coin (30) et dans lequel une seconde nervure de guidage (44) s'étend en parallèle décalée le long de l'axe d'entrée (I) par rapport à une surface extérieure (21) du corps (20).

8. Outil d'insertion de câbles (10) selon la revendication 1, dans lequel l'ailette de guidage (60) est en forme de L ou incurvée, comprenant une portion d'ailette de base (62) connectée mécaniquement au bord de corps (40) et une portion d'ailette de coulissement (64) ayant une extrémité libre se projetant depuis la portion d'ailette de base (62).

9. Outil d'insertion de câbles (10) selon la revendication 8, dans lequel l'ailette de guidage (60) comprend une surface de coulissement de câble (68) agencée en vis-à-vis de la portion d'ailette de coulissement (64).

10. Outil d'insertion de câbles (10) selon la revendication 8 ou 9, dans lequel la portion d'ailette de base (62) comprend au moins une nervure sonore (66) se projetant depuis la portion d'ailette de base (62) adaptée pour rester en éloignement des ondulations du tube ondulé coupé (100) tandis que l'outil d'insertion de câbles (10) est déplacé le long du tube ondulé coupé (100) et dans lequel ladite au moins une nervure sonore (66) frappe contre les ondulations du tube ondulé coupé (100) quand l'outil d'insertion de câbles (10) est utilisé dans une position de non-alignement, générant ainsi un son.

11. Outil d'insertion de câbles (10) selon la revendication 1, dans lequel l'ailette de guidage (60) s'étend depuis le bord de corps (40) définissant un angle de plus de 45° et de moins de 180° par rapport à la surface extérieure (21).

12. Outil d'insertion de câbles (10) selon l'une quelconque des revendications précédentes, dans lequel le corps (20) est fait à partir d'une seule pièce.

13. Outil d'insertion de câbles (10) selon l'une quelconque des revendications précédentes, dans lequel le corps (20) est fait de matières plastiques.
